# EUROPEAN PATENT APPLICATION

(11) **EP 4 120 102 A1**
(43) Date of publication of application: **18.01.2023**
(21) Application number: 21716482.1
(22) Date of filing: 08.03.2021
(51) Int. Cl.: G06F 16/958, G06F 16/95

(54) **METHOD OF DIGITAL RECOGNITION OF THE DECLARATION OF AGE AND LEGAL CAPACITY TO ACCESS INFORMATION AND DIGITAL CONTENT**

(30) Priority: 13.03.2020 WO PCT/ES2020/070179
(71) Applicant: Jauregui Navarro, Iñaki, 20004 San Sebastián (Guipuzcoa) (ES)
(72) Inventor: ALAVA MARQUÍNEZ, José Iñaki, 20013 DONOSTIA-SAN SEBASTIÁN (ES); CAPRANI, Roberto, 20160 LASARTE-ORIA (ES); JAUREGUI NAVARRO, Iñaki, 20004 SAN SEBASTIÁN (Guipuzcoa) (ES)
(74) Representative: Isern Patentes y Marcas S.L.
(86) International application number: PCT/ES2021/070164
(87) International publication number: WO 2021/180991

(57) **Abstract**

The object of the present invention is a method and a system for reproducing a web page adapted for a specific additional information, particularly, adapted based on the age of a user, the legal access requirements required to access content sensitive to a given jurisdiction. Specifically, the invention proposes the development of a method for obtaining a set of instructions to be applied to the existing code of the web page such that the result provides a personalised web page based on the age and the permanent place of residence of the user and according to the laws applicable to each user.

## Description

### Object of the invention

The object of the present invention is a method and a system for reproducing a web page adapted for a specific additional information, particularly, adapted based on the age of a user, the legal access requirements required to access content sensitive to a given jurisdiction.

Specifically, the invention proposes the development of a method for obtaining a set of instructions to be applied to the existing code of the web page such that the result provides a personalised web page based on the age and the permanent place of residence of the user and according to the laws applicable to each user.

### Background of the invention

Systems for identifying content in web pages for commercial purposes are known (*System and method for identifying content in a web-based marketing environment,* US201916446988). They are used on a daily basis when we access a web page in order to send us adapted advertising information. This can be done thanks to the dynamic capacity that web pages have to adapt to the user (*Dynamic configurability of web pages,* US201815993911). Contracting goods and services electronically, whenever it represents an economic activity, is considered a service of the information society and whoever provides it is a service provider. Therefore, it is subject to the legal obligations of the country/region wherein the viewing and the commercial operations are performed. In Spain, for example, Law 34/2002 on Information Society Services and Electronic Commerce (LSSICE), Organic Law 3/2018, of 5 December, Personal Data Protection and Guarantee of Digital Rights, Law 7/1998, on General Conditions of the Contract and Royal Legislative Decree 1/2007 on the Defence of Consumers and Users and other complementary laws, together with child protection laws.

When one or several Internet users connect to a web page and each one does so from different a geographical location, the web page should provide a copy of the legal terms (comprising the legal notice, cookie policy, privacy policy, terms of use and general conditions of sale) adapted to the regulatory framework of the visiting user in terms of data protection and consumer rights at each of the locations. However, the reality according to the current state of the art is different, since they supply the same information regardless of the location of the user.

Thus, for example, when a user from the European Union accesses a web page of a commercial company from India, the web page offers an access configuration and an information which does not comply with European legislation regarding personal data protection, consumer protection rights, child protection and/or e-commerce protection.

Likewise, said web page provides legal terms on the treatment of data and cookies referring to legislation from India, but omitting any legal reference to the regulations from the European Union, from where the user connects and, wherein legally they must enable the acquisition, storage, treatment, transfer and transmission, processing and, if appropriate, destruction thereof.

It should be indicated that no current information on legal terms is in accordance with the jurisdiction of the user, and at the very least the information provided is deficient and inadequate, sometimes abusive and many times, it has complete invalidity, i.e., it is inadequate, invalid and inapplicable for the physical user and/or consumer, since the only valid regulation for the visitor is that which would be applied based on their permanent place of residence. In the case of the example of the previous paragraph, it would be the regulations of the European Union and more specifically, the country of the European Union where the user is located.

Technology enables the problem to be solved through the use of different domains, such as .es, .de, .fr or .us. However, this solution involves the need to perform maintenance on each of the domains, with the economic costs that this implies.

To avoid this, national domains are often used as a portal to redirect to an international domain, such as .com or .org, returning to the initial problem where the Internet user does not receive a copy of the legal terms of the web page according to the legislation of their location.

Additionally, some web pages show potentially sensitive content or offer services which are not suitable for users younger than a certain age. In this manner, each jurisdiction imposes different age thresholds for accessing each type of content, which are restricted depending on the different countries, states, regions, districts, etc., and on the child protection policy, advertising policies, audiovisual policies and other sector and local policies thereof. Some examples of requirements and restrictions on a worldwide level are: 1) the age of children 2) age for digital consent 3) the age for low-alcohol drinks 4) the age for high-alcohol drinks 5) tobacco 6) marijuana 7) explicit sex/pornography 8) handguns 9) long guns 10) cold weapons 11) explicit violence 12) junk food 13) online gambling in general 14) casinos 15) bingo 16) poker 17) parimutuel betting 18) dog and horse betting and 19) chance betting (lotteries) and similar.

Systems for identifying the legal age are known which are based on several technologies, such as smart cards (*Automated system for accessing resources for adults,* ES1169058 U), verification of the driver's license (*Legal age limit and fingerprint verification system,* US2002039432 A1) or the personal ID number of each country (Age *verifying alcohol delivery system,* CA2973366 A1), but all these systems are limited to verifying if the user meets the legal requirements of the country wherein the service is offered. Said legal requirements change in each country, region, country or autonomous community and are only useful for verifying the local requirements.

Editors of web content supply information, digital content and contracting goods and services electronically. They are considered as services of the information society and who provides them, a service provider, is subject to the legal obligations, not only of the country wherein their web page is hosted, but also the legal obligations of the place the web page is viewed. For those pages with content prohibited or restricted due to age, there can be more than a thousand laws applicable to one same web page regarding access requirements, this requirement being practically impossible to comply with.

At least one system for verifying the location of a user of "online" gambling is known, but it requires the use of a mobile phone and the continuous tracking thereof by means of geolocation systems, such as GPS (*System and method for tracking online gambling with gps to comply with legal jurisdiction,* US2013210516 A1); however, this system breaks the data protection laws of multiple jurisdictions and it is not possible to implement it in other types of devices. Likewise, there are systems for validating users by means of the verification of multiple references (biometric data, passwords, etc.) but they can only be applied to habitual users of the service, such as captured clients or staff belonging to a company or entity (*Condition validation system on personal data,* ES2170018 A1; *Block chain technology-based network digital identity authentication method,* CN107181765 A). The following documents are also known US20130151950 A1, *System and method for web presence for one or more geographical locations,* and US2016277514 A, *Systems and methods for implementing access control based on location-based cookies,* as well as the publication from the same family US20150067116 A1.

However, these systems do not take into account the large amount of legal systems that any normal electronic transaction involves, and more specifically, those that must fulfil a local legal requirement.

That is why a method is necessary to dynamically generate web pages which are in accordance with the legislation corresponding to the location of each Internet user, user, physical person, and/or consumer, thus preventing a web editor from providing information or a service which are inadequate with respect to the jurisdiction of the editor, to the time the legislation of the jurisdiction of the user applies regarding legal age, personal data protection, consumer rights protection and/or the regulatory framework for electronic commerce.

### Brief description of the invention

This invention describes a method for reproducing a web page and additional information on said web page.

The web page can be found programmed in any type of language commonly used to do so, such as: Java, JavaScript, PHP, Python, HTML, CSS, etc. (without such examples implying a limitation).

The code used for programming this web page is stored on a server such that when a device retrieves this code from the server, through the corresponding request, the user can reproduce the contents of the web page.

Moreover, the additional information is stored in a repository through a set of instructions such that when it is executed on a device, the user can reproduce the contents of said additional information.

Just like the web page, said set of instructions can be programmed in any type of language commonly used to do so, such as: Java, JavaScript, PHP, Python, HTML, CSS, etc.

Preferably, said set of instructions is configured so that when a request is executed via widget/script, the adapted information is generated.

The method according to the invention comprises the following steps:
- request, by an electronic device, to a server to obtain the code of the web page with access to said code, said code being configured so that when it is executed on a computer, the web page is reproduced;
- detection by the server or the electronic device of the location from where the request is made;
- obtaining by the server, if the server has detected the location from where the request is made, or rather, by the electronic device, if the electronic device has detected the location from where the request is made, of a set of instructions corresponding to the detected location, stored in a repository,
- modification, by the server, of the code of the web page based on the set of instructions corresponding to the detected location,
- transmission, by the server, of the code of the web page to the electronic device and, if the server has obtained the set of instructions stored in the repository, also the sending of said set of instructions to the electronic device,
- execution of the code of the web page and the set of instructions in the electronic device,
- transmission, by the server, of a request for information of a user to the electronic device, wherein the requested information comprises at least information relating to the age and the location of the user,
- receiving, by the server, of the information of the user,
- enabling, by the server, the reproduction of the content of the web page on the electronic device when the information of the user satisfies given requirements of the set of instructions corresponding to the location.

The electronic device is in data communication with the server and can be in data communication with the repository if it obtains the set of instructions directly from the repository.

This means that the electronic device is configured to transmit and receive information from the server and from the repository (if it obtains the set of instructions directly from the repository). Specifically, the electronic device is configured to make at least one request to the server to obtain the code of the web page and to receive said code of the web page as well as the set of instructions. In a preferred embodiment, the electronic device is configured to obtain the set of instructions directly from the repository. To do so, the electronic device may have to make a request to obtain the set of instructions from the repository or that the same repository may have to transmit it directly to the electronic device starting from a command from the server.

If the legal requirements required for access to the web page are complied with, the server generates a new computer code which is recorded and stored in a registry of declarations with the data communicated by the device, together with those for identifying the existence of the communication itself. The registry of declarations can comprise a declaration of consent or refusal specific for each cookie, script and/or tracker used in the web page, and can also comprise additional information about how the user desires their personal data to be stored and processed, or if by exerting their inherent rights, they oppose, limit or reject the storage and processing of their personal data. This registry of declarations can include techniques for immutability in order to ensure the value thereof as proof, or traceability, such as the creation of hash algorithms, distributed storage, etc.

If the user of the device had their permanent place of residence in a jurisdiction different from that of their location, once the instructions of the web code have been executed, the user can, through a selector, declare the age and the jurisdiction that truly corresponds to them based on their habitual place of residence, sending this declaration in the form of computer code to the server, wherein if they meet the legal requirements, it is recorded in a registry or database of declarations, wherein it can further have stored an authorisation or rejection of cookies, scripts and trackers and/or an exercise of rights of opposition, limitation and/or acceptance of the storage and processing of data, which can further add technical measures in order to ensure the traceability. Location should be understood as both the real location of the user and the permanent or habitual place of residence of the user.

If the user browsing was previously identified by any means, and transmitted this information by computer code in order to access the web page, the server would read by any means the previously received information and would configure the legal texts for the access, based on said information, receiving the access request execution and recording said information in the database of declarations, and that, just like before, it can add other declarations such as their acceptance or refusal of cookies, scripts and trackers as well as the acceptance, opposition or limitation of certain types of storage and processing of data, and that it can further add technical measures in order to ensure the traceability.

The electronic device is in data communication with the server and can be in data communication with the repository if it obtains the set of instructions directly from the repository. Preferably, the request to obtain the code of the web page made by the electronic device to the server has at least one associated IP address, and may have other location systems related to geolocation such as coordinates, triangulation for positioning, GPS, etc. The user can also be offered the possibility to declare their permanent country of residence, in this manner determining the jurisdiction applicable as a substitute for the geolocated one for the scenario of displaced users or a border error, and even, the electronic device through browsing wherein the user is identified by any method from a simple user account to methods of digitally authenticating the identity orders the substitution of the located jurisdiction with the authenticated one of the user. In this manner, the user is suitably informed of the access requirements and legal prohibitions which correspond to their permanent country of residence.

The electronic device or the server are configured to detect the location from where the request is made by the electronic device. Preferably, said location is the geographic location according to the country/region wherein the user is located. The IP address will preferably be the IP address of the request corresponding to the sender of the request.

In a particular embodiment, when the information of the user satisfies given requirements of the set of instructions corresponding to the location, it comprises the step of:
- generating, by the server, a file with at least the information received from the electronic device, and storing the file in a database of declarations.

Preferably, the request to obtain the code of the web page made by the electronic device to the server has at least one associated IP address, and may have other location systems related to geolocation such as coordinates, triangulation for positioning, etc.

Also, the electronic device is configured to execute and reproduce the code of the web page and the set of instructions stored in the repository.

Consequently, the electronic device is configured to reproduce web pages either visually, by sound or by touch.

To this end, the electronic device can be any electronic apparatus comprising at least a central processing unit, a screen, a memory and a communications port. For example: a computer, a tablet, a smartphone, etc.

Preferably, the electronic device will have access to the Internet and will communicate with the server as well as with the repository (if the electronic device obtains the set of instructions directly from the repository) via the Internet, being able to use the appropriate protocols to do so, for example: IPv4, IPv6, TCP, UDP, etc.

The electronic device or the server are configured to detect the location from where the request is made by the electronic device. Preferably, said location is the geographic location according to the country/region wherein the user is located.

In one embodiment, the transmission of the set of instructions stored in the repository is performed by means of cookies, trackers, scripts and/or computer code.

In the preferred embodiment wherein the request to obtain the code of the web page made by the electronic device to the server has an associated IP address or other geolocation system, the location from where the request is made by the electronic device or the server can be found by means of the location of the IP address of the request or geolocation coordinates, or another geolocation system.

The IP address will preferably be the IP address of the request corresponding to the sender of the request.

In a preferred embodiment, the electronic device has at least an IP address or geolocation coordinates, or another geolocation system. This IP address can be public or private. If it is public, the IP address of the sender of the request coincides with the IP address of the electronic device. If the IP address of the electronic device is private, the IP address of the sender of the request corresponds to the public IP address of a router which offers Internet connection to the electronic device with a private address.

If the server is what detects the location, the set of instructions stored in the repository corresponding to the detected location is obtained by the same server.

This means that the server and the repository are in data communication with the capacity to transmit and receive data between them.

If the electronic device is what detects the location, the set of instructions stored in the repository corresponding to the detected location is obtained by the same electronic device.

This means that the electronic device and the repository are in data communication with the capacity to transmit and receive data between them.

If the electronic device is what obtains the set of instructions from the repository, the repository can have at least one associated IP address and the server can have it stored such that the electronic device obtains the IP address of the repository from the server so that the same electronic device can then obtain the set of instructions from the repository.

Preferably, the repository stores a set of instructions according to the different possible locations of the user. For example, the repository can store a set of instructions for each country/region of the planet or a certain number of countries/regions can share one same set of instructions such that when they are executed they provide additional information for users who are connected in those countries/regions.

Then, based on the location detected by the server or the electronic device, the repository returns one set of instructions or another to the server or to the electronic device.

Also, said additional information can be provided in more than one language since a user connecting from one country/region does not necessarily have to know the official language of said country/region. To do so, the repository can store a set of instructions according to the different locations of the user and in at least 2 languages.

Then, based on the location detected by the server or the electronic device and the language detected by the server or the electronic device, the repository returns one set of instructions or another to the server or to the electronic device, preferably in the native language of the user.

It should be noted that the server can detect the language through personalisation cookies or through information exchanged about the browsing language preference used by the user or through the language selected by the user if the web page allows different languages to be selected.

Preferably, if the server is what detects the location of the request, said server is responsible for detecting the language of the electronic device. In contrast, if the electronic device is what is in charge of detecting the location of the request, said electronic device detects the language thereof.

This enables the user connecting from a certain country/region to obtain the set of instructions corresponding to this certain country/region in their native language.

In a preferred embodiment, the repository may be storage means such as a memory or a database, such that the server or electronic device could easily access the set of instructions, but it may also comprise a server connected to a database. In the latter case, each time the server or the electronic device attempts to obtain the set of instructions stored in the repository, they must make the corresponding request to the server to obtain said set of instructions from the repository so that it can retrieve the aforementioned set of instructions from the database and thus transmit it to the requester (the server or the electronic device).

Likewise, in another preferred embodiment, the repository is a database forming part of the same server wherein the web page is hosted. In one embodiment, the repository is a multilingual database associated with the server.

In one embodiment, the set of instructions stored in the repository is configured so that when it is executed by a computer it provides additional information about the web page, said additional information comprising the legal terms associated with a service of the server wherein the web page is hosted and with the place of residence, the location and age of the user.

If the server has obtained the set of instructions, it will transmit the code of the web page and the set of instructions to the electronic device.

If the electronic device has obtained the set of instructions, the server will transmit the code of the web page to the electronic device.

Since the electronic device ends up having the code of the web page and the set of instructions, either through the server or directly, it can execute them and reproduce the web page with the corresponding additional information based on the location of the request made to the server.

Consequently, through the method of the invention, a user who is in the country of Spain and accesses a web page of an Indian company hosted on a server from India will be able to reproduce the web page of the Indian company with specific additional information for Spain.

Preferably, such specific additional information for Spain will be able to be reproduced in the native language of the user since they will have previously selected it or it will have been detected previously.

For example, a user who is in the Basque Country and intends to access the web page of an Indian company will be able to reproduce the additional information in Basque if they are browsing via the web page in Basque or they have designated this when they entered the web page.

In a preferred embodiment of the method of the invention, the additional information comprises the legal terms associated with a service of the server wherein the web page is hosted and/or the location detected by the server or the electronic device. Such legal terms can refer to the regulatory framework of the editor of the web page, but, in particular, the regulatory framework for personal data protection, the regulatory framework for consumer rights protection, child protection and the regulatory framework for electronic commerce (if the web page allows buying and selling products and/or services), as well as the acquisition, storage, processing, treatment, transfer and transmission, and removal of the data compiled by the server while the user navigates the web page (i.e., from when the electronic device sends the request to the server to obtain the web page and until the code of the web page and the set of instructions are executed) or any other which could be applied legally will be defined.

In this case, the user from a certain country/region that connects to the web page of a company from another country/region different from that of the user, said web page being hosted in another country/region different from that of the user and that of the company, obtains legal information about the different laws applicable to the country/region of the user in terms of information and protecting their personal data, consumers, electronic transactions, etc.

The geolocation can be substituted by the true applicable jurisdiction as well as the one declared by the user if the visiting user were registered, or previously identified by any digital authentication means, the one communicated by the device with which the browsing is produced. In one case or the other, only those persons who comply with the legal age requirements would have access. These legal age requirements can vary, apart from by the jurisdiction, based on the information, content, goods or services of the web page or type of platform that is to be accessed, both the web page or any other web subpage being able to have been catalogued beforehand or simultaneously by any means, such that an American drug store can offer on one same page different ages for access to the web subpages thereof as it performs the sale of alcohol, handguns, long guns, tobacco or lottery sales.

In another preferred embodiment, the set of instructions comprises a group of instructions configured so that when they are executed by a computer they provide a configurator to accept, reject, and/or modify the cookies, trackers, scripts and/or any type of analogous computer code of the web page. Said options can be reproduced with the corresponding menu or interface, which may also contain a direct exercise of the personal data protection rights (access, correction, opposition, cancellation/deletion, portability, limitation and within this right of limitation, or outside of it, the declaration that personal data shall not be sold, rented, waived or transferred or the declaration that no profiling is performed with the data, or the declaration that their personal data is not subject to automated treatment. Or any other declaration.

Also, this configurator can include a text explaining the technical and legal implications of at least one of the options mentioned (accept, reject and/or modify).

This configurator may have an associated database or table wherein certain information is stored about the cookies, trackers and/or scripts sent by the server to the electronic device when the web page is reproduced by the electronic device. Said information may be the domain of the page, the contents, the version, the expiration date, the description and the purpose thereof, the host of the information and providing the type and the classification thereof as its own or belonging to third parties.

If the user uses the web page of the editor that uses the first layer pop-up of the cookie, tracker and script warning-configurator, when they complete the action of accepting or rejecting, they can send at least the following information: Implicitly, identification code of the editor, identification code of the user, the IP address of the HOST, the name of the HOST, the request method used to access the page (for example 'GET', 'HEAD', 'POST', 'PUT'), the user agent used to access the page (type of browser used), the IP address of the server wherein the script is currently being executed, the languages accepted by their browser, the types of characters accepted, the type of coding accepted, the cookies, trackers and scripts requested in the request of the user (operating cookie of the warning), the address of the web page that created the link to the resource being requested (REFERER), the port used by the machine of the user (HOST) to communicate with the web server, the URI used to access the page, the unequivocal ID generated in a request, the timestamp of the start of the request (with precision up to microseconds), start date of the request. The following information can be explicitly sent: chosen cookie, tracker and script configuration detailing the options for personalisation cookies, trackers and scripts, statistics cookies, trackers and scripts, marketing cookies, trackers and scripts or others; user identification data such as name, surname, identification document number, email, address, city, province, region, country, preferences on options for preferences, interests, advertising, geolocation, weather conditions, age, date of birth, jurisdiction of the user, languages, etc.

In another preferred embodiment, the configurator is configured so that in relation to certain personal data of the user of the web page that the cookies, trackers and scripts may compile, express and unequivocal consent is required from said user, having received prior information about the corresponding treatment thereof. Said personal data could perfectly be: name, surname, telephone, address, email or any other type of identifying data of the user.

This would be, for example, the case of those web pages wherein the user can purchase an object and/or service or they intend to sign up for some type of newsletter. In order to acquire the object and/or service or receive the corresponding newsletter, the user of the web page must provide a series of personal data. So, as previously mentioned, the configurator allows the user to be duly informed of the storage and processing of said personal data and that in order to perform said storage and processing, the express and unequivocal consent of the user of the web page is required.

It should be noted that the information compiled by the cookies can be stored in a database configured for this purpose, such that for each consent given by the user of the web page, an identifier is assigned and the data compiled under this consent is associated with it. In this sense, appropriate technical and organisational security measures may be applied for storing personal data, such as methods and systems for encryption, encoding, distributed storage, anonymisation, pseudonymisation, etc.

This database enables the traceability of the consents issued and collected by the user of a web page, as well as the rejection of consent to be obtained. If the user accesses from a hidden location (hidden IP) or from the deep web, the server can automatically reject the consent.

The information registered about the age of the user can come from both the browser of the user itself, an identification or authentication service, or a prior web page wherein the user is registered and their jurisdiction is known, and in the absence of this, the server after having received the geolocation or the IP, supplies the warning of the legal age for complying with the regulatory framework of each state, country or region based on the information, content, goods and services offered by the web page. The user can further substitute it with an age declaration which in an immutable manner is registered and stored together with the information of the legal texts offered.

In another preferred embodiment, the configurator is configured to be reduced to one button after the user decides to accept, reject and/or modify the cookies, trackers and/or scripts of the web page. Said button would remain accessible by the user of the web page while browsing it in case they decide to change their decision at any time. For example, if a user has decided to reject the cookies, trackers and/or scripts and after browsing the web page for some time decides to accept them, they could do so by pressing the button and accepting the cookies, trackers and/or scripts through the corresponding option, or conversely after a rejection, accept them.

In a preferred embodiment, the set of instructions comprises a group of instructions configured so that when they are executed by a computer they provide a selector configured to enable a user to introduce a location corresponding to their permanent place of residence, and which comprises the step of:
- storing, by the server, the information of the permanent place of residence of the user in the database of declarations.

In a preferred embodiment, in the case of information corresponding to the user previously existing in the database of declarations, it comprises the step of:
- adapting, by the server, the code of the web page based on the information corresponding to the user stored in the database of declarations.

The age warning-configurator, which can be inserted into the script, tracker and cookie warning, can include the option so that the user responds affirmatively or positively if they are older/younger than the age legally required to access the information, content or goods and services they intend to contract. In this case, the configurator can, as a measure for child and youth protection, further fully occupy the entire screen of the device and the warning appears without covering 100% and deploying behind it a layer of any type which is opaque, semi-translucent, translucent, with or without script, images, photographs, etc., which hides the information, content or main goods and services preventing the viewing thereof, and even without a layer, such that in the call to the server it supplies the declaration of having the required legal age of the state, country, region of access or the access is denied. In this case of the web editor, it is guaranteed with the warning-configurator that the legal warning thereof correctly communicates the legal age requirements for access to the web pages thereof, complying with the duty thereof to inform correctly. It should be understood that configurator, warning-configurator, access and consent configurator, cookie configurator, access, age, cookie, tracker and/or script configurator, are terms which refer to a configurator for cookies, trackers, scrips and/or another type of analogous computer code, age parameters, etc., as well as declarations of jurisdiction, age and/or selection of privacy options.

If the additional information provided by the set of instructions when they are executed on a computer refers to the legal terms associated with a service of the server and/or the location detected by the server or the electronic device, the configurator can have an option for reproducing the legal terms. In another embodiment, the configurator has an option for reproducing the legal terms and/or the access ages. As mentioned above, said legal terms may refer to the corresponding legal notice, terms of use, privacy policy, cookie policy and general conditions sale, as well as any other legal document.

In another preferred embodiment, the configurator has a band around it wherein advertisements are shown. In another embodiment, the band is arranged in an upper, lower and/or side position with respect to the configurator. Preferably, this band is a banner and can be arranged in the upper and/or lower and/or side portion of the configurator. Also, this band can have any shape, but it is preferably circular, oval, rectangular or triangular such that it surrounds both the configurator and the space outside it. Also preferably, the advertising insertion can be made by banners inside the configurator.

In another preferred embodiment configurator can include the option for the user to respond affirmatively or positively if they are of legal age. In this case, preferably, the configurator can fully occupy the screen of the device, such that in the call made to the server it provides the legal age in the country, state, region, in order to access pages of goods or services for adults. In this case, the web editor guarantees with the warning-configurator that its web pages are only accessed by users of legal age in the country where they are reproduced and, depending on the regulatory framework of each country, state, region, the legal age can vary given that there are countries where it is 16 years, others where it is 18 years, 21 years, etc. This information is communicated by the server.

In another preferred embodiment, the configurator can include an option wherein the user responds affirmatively or positively if they are younger than 13, 14, 15, 16, 17, 18 years of age or another regulated age. The server, after having received the geolocation or the IP, provides the warning configurator with the legal age in order to comply with the regulatory framework of each country, state, region in relation to the prohibition of capturing, storing, selling, transmitting, transferring data from minors in a range of a certain legal age. This information is communicated by the server.

In another preferred embodiment, the configurator can include an option for enabling the user to directly exercise their rights. Thus, by assigning an unequivocal identifier, or a personal identifier through to each consent, this consumer user can access the captured and stored data, or optionally through a second layer of information, and exercise their legal rights to access, correction, deletion/removal, opposition, portability, limitation or removal of consent directly in the server.

In order to facilitate the right to limitation of the user in the main layer and/or in a secondary layer, preferably, the inclusion of an option can be enabled wherein certain rights of the consumer users are exerted in a joint or separated manner, such as 1) the right to their personal information not being sold, rented, released, disclosed, diffused, made available, transferred or communicated in any manner orally, in writing or electronically or another medium, to a company or third party, for free, for a price or any other valuable consideration 2) The right to limit their personal data from being used to perform profiling 3) The right to their data being used to supply personalised advertising 4) The right to their data not being used for automated processing for automated decision making such as insurance contracts, financial contracts, etc., 5) The right to not be geolocated 6) The right to not be the object of tracking and/or monitoring 7) The right to their personal data not being combined with other data 8) The right to their behaviour not being used to perform predictive analyses 9) The right for their data to not be the object of processing with big data and/or artificial intelligence or any other right that may correspond to them.

In another preferred embodiment of the method according to the invention, said method comprises a prior step in which the server wherein the code of the web page is hosted obtains the digital information necessary for determining those parts of the web page that are enabled or disabled for reproduction in certain locations.

This enables a corporate web page in a certain country to be reproduced in one way in this certain country, which is different from the way it is reproduced in a country different from that certain country.

For example, an Indian company wherein said Indian company can sell products in their country but cannot sell them in Europe might have an interest in their web page offering sales services for their products for those users from India, while only having an interest in having an informative web page about the company and its line of work for those users outside of India. In this case, a preferred embodiment of the method of the invention would enable the owner of the web page reproduced by the user in India to be able to reproduce the web page with the sales services (together with the additional information corresponding to the country of India); however a user who reproduces the web page in Spain could not reproduce said sales services and could only have access to the informative sections about the company and its line of work (together with the additional information corresponding to the country of India) regarding business services, but if it compiles personal data, it complies with the legislation of the place of residence of the consumer user.

Then, said server adapts the code of the web page so that when it is executed on a device, it enables or disables certain portions of the web page based on the location of the request to obtain the web page.

If the server is what detects the location of the request to obtain the code of the web page, said server directly adapts the code of the web page and transmits it to the electronic device together with the set of instructions of the repository corresponding to the detected location. The electronic device then executes said web page code adapted to the detected location and the set of instructions according to the detected location, such that the user can reproduce, through the electronic device, the web page adapted to the detected location and the additional information according to the detected location.

If the electronic device is what detects the location of the request to obtain the code of the web page, then said electronic device sends the location of the request to the server so that said server can adapt the code of the web page according to said detected location, and then said server transmits the code of the web page adapted to the detected location. Said electronic device will execute the code of the web page adapted to the detected location together with the set of instructions corresponding to the detected location, such that the user will be able to reproduce the web page adapted to the detected location together with the additional information corresponding to the detected location on the electronic device.

To do so, the server may require a form to be filled out by the owner of the web page wherein the options to be enabled or disabled are indicated, depending on different possible locations.

In a preferred embodiment of the method of the invention, the additional information comprises the legal age of access being able to be associated with the type of activity prohibited or restricted by country, region, state, county, city, being able to add legal texts associated with a service of the server wherein the web page is hosted and/or the location detected by the server or the electronic device.

In a preferred embodiment of the method of the invention, the additional information offered can be modified by the declaration of the very user of their permanent place of residence, and once again the suitable information is offered, which once accepted and declared, can be recorded and registered, being able to make use of technical measures for immutability, traceability and proof of required legal age, being able to further comprise:
1) an adaptation of the legal terms associated with a service of the server wherein the web page is hosted and/or the location detected by the server or the electronic device
2) the accepted or rejected cookies, scripts or trackers
3) the acceptance, opposition or limitation to the storage and processing of personal data.

In another preferred embodiment, the set of instructions can comprise a group of instructions configured so that when they are executed by a computer they provide a configurator to accept, reject, and modify the configuration of scripts, trackers and/or cookies, etc. supplied by the web page.

In another preferred embodiment, the additional information provided by the set of instructions when they are executed on a computer refers to the legal terms associated with a service of the server and/or the location detected by the server or the electronic device, the configurator can have an option for reproducing said legal terms suitable for the age and/or the jurisdiction.

In another preferred embodiment, the configurator has a band around it or spaces delimited by a computer code in order to offer advertisements, such as upper, lower or side iframes.

In another preferred embodiment, the age configurator has an access together with which the user can directly exert their right to access their personal data, or correction, or opposition, or limitation, or deletion, or portability, or removal of the consent as well as articulating the opposition and specific limitation to the profiling thereof, to the combination of the data with third-party databases, to the tracing thereof, to the tracking and monitoring thereof, to massive processing, to automated processing, to the opposition and limitation of marketing (or opting out) or opposition to the sale, transfer, rental, use, sharing, transfers, etc., of their personal data (at least three, IP, age, place of residence).

In another preferred embodiment, the age configurator offers a normalised consent receipt, to which the jurisdiction and declared age are added, being able to add the additional information offered or necessary links for the access to the offered information, as well as the accepted or rejected cookies, scripts and trackers, and the accepted/rejected or limited storage and processing of personal data.

In a preferred embodiment, when the information of the user does not satisfy given requirements of the set of instructions corresponding to the location, the server prevents the access of the user to the web page.

The object of the present invention is also a system for reproducing a web page and additional information comprising technical features and/or elements configured to carry out the method of the invention, as well as any of the preferred embodiments thereof.

In this sense, the system according to the invention comprises:
- a server configured to store a code of a web page and to transmit said code after a request to obtain said code by an electronic device;
- a repository configured to store different sets of instructions according to certain locations and to transmit said sets of instructions to the server or to an electronic device in at least one language;
- electronic device configured to request and obtain the code of the web page from the server, as well as to execute the code of the web page and the sets of instructions stored in the repository.

The electronic device is configured to transmit information of a user to the server.

The code of the web page is configured so that when it is executed on a computer, the web page is reproduced and the sets of instructions are configured so that when they are executed on a computer they provide additional information.

The server and/or electronic device is configured to obtain at least one set of instructions from the repository.

The server and/or the electronic device are configured so that, when the electronic device makes a request to the server for the code of the web page, they detect the location from where the request is made.

In a preferred embodiment, the repository is in data communication with the electronic device and/or with the server.

If the server is what detects the location from where the request is made, the server obtains a set of instructions from the repository corresponding to the detected location and transmits the code of the web page and the set of instructions to the electronic device. Therefore, the server and the repository are in data communication, with both elements able to transmit and send data between each other.

If the electronic device is what detects the location from where the request is made, the electronic device obtains a set of instructions from the repository corresponding to the detected location and the language of the user and the code of the web page from the server.

The electronic device is in data communication with the server and can be in data communication with the repository if it obtains the set of instructions directly from the repository.

In a preferred embodiment, the electronic device is configured to obtain the set of instructions directly from the repository. To do so, the electronic device may have to make a request to obtain the set of instructions from the repository or that the same repository may have to transmit it directly to the electronic device starting from a command from the server.

If the electronic device is what obtains the set of instructions directly from the repository, the repository can have at least one associated IP address and the server can have it stored such that the electronic device obtains the IP address of the repository from the server so that the same electronic device can then obtain the set of instructions from the repository.

The electronic device can be any electronic device comprising at least one central processing unit, a screen, a memory and a communications port. For example: a computer, a tablet, a smartphone, etc.

Preferably, the electronic device will have access to the Internet and will communicate with the server as well as with the repository (if the electronic device obtains the set of instructions directly from the repository) via the Internet, being able to use the appropriate protocols to do so, for example: TCP/IP, UDP, etc.

Preferably, the request to obtain the code of the web page made by the electronic device to the server has at least one associated IP address, geolocation coordinates or another geolocation system.

In this case, the location from where the request is made by the electronic device or the server can be found by means of the location of the IP address of the request, the geolocation coordinates or another geolocation system.

In a preferred embodiment, the repository may be storage means such as a memory or a database, for which reason the server or electronic device could easily access the set of instructions, but it can also comprise a server connected to a database. In the latter case, each time the server or the electronic device attempts to obtain the set of instructions stored in the repository, they must make the corresponding request to the server to obtain said set of instructions from the repository so that it can retrieve the aforementioned set of instructions from the database and thus transmit it to the requester (the server or the electronic device).

The electronic device ends up having the code of the web page and the set of instructions, either through the server or directly, for which reason when they are executed the user can reproduce the web page with the corresponding additional information based on the location of the request made to the server.

In a preferred embodiment, the system further comprises a database of declarations.

In a preferred embodiment of the method of the invention, the additional information comprises the legal terms associated with a service of the server wherein the web page is hosted and/or the location detected by the server or the electronic device, or the declaration of the place of residence of the user.

In another preferred embodiment, the set of instructions comprises a group of instructions configured so that when they are executed by a computer they provide a configurator to accept, reject, and/or modify the cookies, trackers and/or scripts of the web page.

If the additional information provided by the set of instructions when they are executed on a computer refers to the legal terms associated with a service of the server and/or the location detected by the server or the electronic device, the configurator can have an option for reproducing said legal terms.

In another preferred embodiment, the configurator has a band around it, above it, below it and/or to the side of it wherein advertisements are shown.

### Brief description of the figures

The previous advantages and features will be understood more fully in light of the following detailed description of an exemplary embodiment, with reference to the figure attached, which must be taken by way of illustration and not limitation, wherein:
Figure 1 corresponds to a preferred embodiment of the system according to the invention.
Figure 2 shows another preferred embodiment of the system according to the invention.

### Description of a preferred embodiment

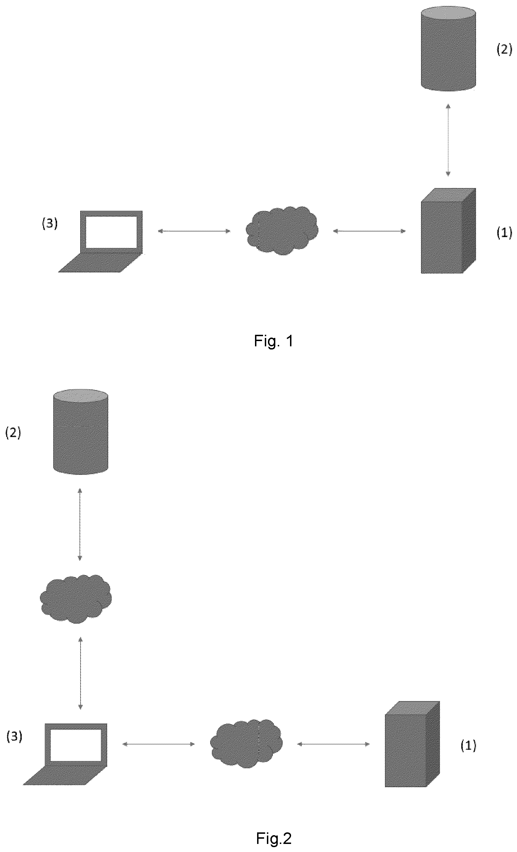

Fig. 1 shows a preferred embodiment of the system of the invention configured to perform the method of the invention.

Said system comprises a server (1), a repository (2) and an electronic device (3).

The server (1) stores the code of a web page such that when this code is executed on a computer, the user can reproduce the corresponding web page.

The server (1) is in data communication with the electronic device (3) such that when the electronic device (3) requests to obtain the code of the web page, the server (1) transmits it to the electronic device (3).

The repository (2) is configured to store different sets of instructions according to certain locations, said sets of instructions being configured so that when they are executed on a computer they provide additional information.

In this preferred embodiment, the repository (2) has a set of instructions for each country/region on the planet such that when a group of instructions is executed, the user can reproduce a warning about the applicable legislation regarding personal data protection, consumer rights protection, child protection and the regulatory framework for electronic commerce for the corresponding country.

In this preferred embodiment, the repository (2) is in data communication with the server (1) such that the server (1) can obtain the set of instructions corresponding to a specific country.

The electronic device (3) is configured to request and obtain the code of the web page and a set of instructions stored in the repository (2) from the server. Likewise, the electronic device (3) is configured to execute the code of the web page and thus reproduce the web page, as well as to execute the set of instructions and reproduce the additional information consisting of the warning about the applicable legislation regarding data protection, consumer protection and child protection and the regulatory framework for electronic commerce of a specific country/region.

Preferably, the electronic device (3) is a computer.

The electronic device (3) makes a request to the server (1) to obtain the code of the web page, an IP address, geolocation coordinates, or another geolocation system being associated for said request.

The server (1) receives the request of the electronic device (3) and detects the country from where the request to obtain the code of the web page is made by means of detecting the country of the IP address associated with said request, or by geolocation coordinates, or another geolocation system.

The server (1) obtains the set of instructions corresponding to the detected country from where the request is made from the repository (2).

The server (1) transmits the code of the web page and the set of instructions to the electronic device (3).

The electronic device (3) executes the code of the web page and the set of instructions such that the web page and the additional information consisting of the applicable legal terms regarding personal data protection, consumer rights protection, child protection and the regulatory framework for electronic commerce of the previously-detected country are reproduced in the electronic device (3).

Moreover, Fig. 2 shows another preferred embodiment of the system of the invention configured to carry out the method of the invention.

Said system comprises a server (1), a repository (2) and an electronic device (3).

The server (1) stores the code of a web page such that when this code is executed on a computer, the user can reproduce the corresponding web page.

The server (1) is in data communication with the electronic device (3) such that when the electronic device (3) requests to obtain the code of the web page, the server (1) transmits it to the electronic device (3).

The repository (2) is configured to store different sets of instructions according to certain locations, said sets of instructions being configured so that when they are executed on a computer they provide additional information.

In this preferred embodiment, the repository (2) has a set of instructions for each state on the planet such that when a group of instructions is executed, the user can reproduce a warning about the applicable legislation regarding personal data protection, consumer rights protection, child protection and the regulatory framework for electronic commerce for the corresponding country.

In this preferred embodiment, the repository (2) is in data communication with the electronic device (3) such that the electronic device (3) can obtain the set of instructions corresponding to a specific country.

The electronic device (3) is configured to request and obtain the code of the web page from the server and to obtain a set of instructions stored in the repository (2) from said repository (2). Likewise, the electronic device (3) is configured to execute the code of the web page and thus reproduce the web page, as well as to execute the set of instructions and reproduce the additional information consisting of the warning about the applicable legislation regarding personal data protection, consumer rights protection, child protection and the regulatory framework for electronic commerce of a specific country.

Preferably, the electronic device (3) is a computer.

The electronic device (3) makes a request to the server (1) to obtain the code of the web page, an IP address or geolocation coordinates, or another geolocation system being associated for said request.

The server (1) transmits the code of the web page to the electronic device (3).

The electronic device (3) detects the country from where the request to obtain the code of the web page is made by means of detecting the country of the IP address associated with said request or geolocation coordinates, or another geolocation system.

The electronic device (3) obtains the set of instructions corresponding to the detected country from where the request is made from the repository (2).

The electronic device (3) executes the code of the web page and the set of instructions such that the web page and the additional information consisting of the applicable legal terms regarding the data protection, consumer rights, child protection and the regulatory framework for electronic commerce are reproduced in the electronic device (3).

In a preferred embodiment, when a user visits a page without prior identification, the configurator of the age, which may or may not be a script, tracker and cookie configurator, and after receiving the access request, and in accordance with the page type thereof based on the information, content, goods and services it contains and by geolocation it offers the visiting user the option to declare the age of the jurisdiction detected, being able to offer as well the possibility of changing the language used. The visiting user can further configure the jurisdiction, by customising it to their true place of residence. If, due to the type of information, content and goods and services there are local measures legislated to restrict or prohibit access to the type of page and as proactive measure for child and youth protection, preferably the configurator of the age will fully occupy the screen of the device viewing the response, hiding the content, the information and the services and goods offered, also being able to configure a smaller size, and deploying a rear layer in order to hide the information, content, goods and services of the reference. If the page were with content for adults, only users with the legal age in the country reproducing it, and, depending on the regulatory framework of each state, country, region, the legal age can vary given that according to the information, content, goods and services there are countries that indicate it as 16 years, others 18 years, 19 years, 20 years, 21 years and even 25 and 30 years in order to be able to buy handguns; and even in some countries it cannot be accessed since the access is prohibited.

In another preferred embodiment, the age configurator, which can be inserted into the script, tracker and cookie configurator, can include an option wherein the user responds affirmatively or positively if they are older/younger than a certain age, whether it is 12, 13, 14, 15, 16, 17, 18, 19, 20, 21 or another age, which are the digital consent ages for children required to store and register data from minors (personal data, activity on the network, etc.). The server (1), after having received the information of the user, if it was not registered in the browser, in a prior page or in the device, by means of geolocation or the IP, supplies the web page with the information about the legal age in order to comply with the regulatory framework of each state, country, region, etc., in relation to the digital consent ages for children and thereby, to the prohibition of capturing, storing, selling, transmitting, transferring data from minors in a range of a certain legal age. This information is communicated by the server (1) to the user. The visiting user can further configure the jurisdiction, by customising it to their legal place of residence.

With the method proposed, each subpage is always accessed by the user with the required legal age. For example, if the drug store were in any American state, an American resident in South Carolina would be required to be 21 years old in order to access the purchase of alcohol, tobacco or handguns and 18 years old to purchase long guns or lottery tickets. However, if the American visitor resided in Nebraska, they would be required to be 19 years old in order to purchase alcohol. However, if the web page received the visit from a Spanish resident in Spain, they could be sold alcohol since the required age is 18 years old or handguns if they had a weapons permit. In this manner, when the non-registered users access they are offered the suitable legal information, enabling the substitution thereof with the declaration of the national place of residence of the user. If the user were registered or authenticated, they would be offered the legal information for access based on their national, regional, state, etc. place of residence. Said declaration is stored in a digital registry, on which measures can further be adopted for immutability, authenticity and exactness, such as distributed storage, the calculation of hash algorithms and others, and that after the recording and registration process they create and store a file which guarantees the traceability and proof of the legal information offered regarding the age, together with the legal texts of the web page, the age and the jurisdiction finally declared, being able to add the accepted or rejected scripts, cookies and trackers and the opposition, limitation or acceptance of storage and processing of personal data. The recording and registration system can be multiple and neuronal, such that there is a server (1) for registration and first processing located in the national jurisdiction of the user, thus complying with the laws regarding sovereignty of data and residence of the data of the users such as for example China and Russia, which force the first storage and processing to be performed in the sovereign country of the user.

## Claims

1. A method for reproducing a web page and additional information, comprising the following stages:
- request, by an electronic device, to a server to obtain the code of the web page with access to said code, said code being configured so that when it is executed on a computer, the web page is reproduced;
- detection by the server or the electronic device of the location from where the request is made;
- obtaining by the server, if the server has detected the location from where the request is made, or rather, by the electronic device, if the electronic device has detected the location from where the request is made, of a set of instructions corresponding to the detected location, stored in a repository,
- modification, by the server, of the code of the web page based on the set of instructions corresponding to the detected location,
- transmission, by the server, of the code of the web page to the electronic device and, if the server has obtained the set of instructions stored in the repository, also the sending of said set of instructions to the electronic device,
- execution of the code of the web page and the set of instructions in the electronic device,
- transmission, by the server, of a request for information of a user to the electronic device, wherein the requested information comprises at least information relating to the age and the location of the user,
- receiving, by the server, of the information of the user,
- enabling, by the server, the reproduction of the content of the web page on the electronic device when the information of the user satisfies given requirements of the set of instructions corresponding to the location.

2. The method according to the preceding claim, wherein the detected location corresponds to a geographical location.

3. The method according to any of the preceding claims, wherein the transmission of the set of instructions stored in the repository is performed by means of cookies, trackers, scripts and/or computer code.

4. The method according to any of the preceding claims, wherein the repository has at least one associated IP address which is stored in the server and wherein said method comprises an additional step wherein the electronic device obtains the IP address of the repository from the server.

5. The method according to any of the preceding claims, wherein the request to obtain the code of the web page by the electronic device has at least one associated IP address.

6. The method according to the preceding claim, wherein the location from where the request is made is detected by means of the location of the IP address of the request.

7. The method according to any of claims 1 to 3, wherein the request to obtain the code of the web page by the electronic device has at least one associated geolocation information.

8. The method according to the preceding claim, wherein the location from where the request is made is detected by means of the location of the geolocation information.

9. The method according to any of the preceding claims, wherein the repository is a server connected to a database.

10. The method according to any of the preceding claims, wherein at least one set of instructions stored in the repository is configured so that when it is executed by a computer, it provides the additional information such that said additional information comprises legal terms associated with the location to which they belong.

11. The method according to the preceding claim, wherein the legal terms refer to the regulations associated with the treatment of the data compiled by the server from the request to obtain the code of the web page until the execution of the code of the web page and the set of instructions.

12. The method according to any of the preceding claims, wherein the set of instructions comprises a group of instructions configured so that when they are executed by a computer they provide a configurator to accept, reject, and/or modify the cookies, trackers and/or scripts of the web page.

13. The method according to any of the preceding claims, wherein when the information of the user satisfies given requirements of the set of instructions corresponding to the location, it comprises the step of:
- generating, by the server, a file with at least the information received from the electronic device, and storing the file in a database of declarations.

14. The method according to any of claims 11-13, wherein the configurator has an option for reproducing the legal terms associated with the location to which they belong.

15. The method according to any of the preceding claims, wherein the set of instructions comprises a group of instructions configured so that when they are executed by a computer they provide a selector configured to enable a user to introduce a location corresponding to their permanent place of residence, and which comprises the step of:
- storing, by the server, the information of the permanent place of residence of the user in the database of declarations.

16. The method according to any of claims 13-14, wherein in the case of information corresponding to the user previously existing in the database of declarations, it comprises the step of:
- adapting, by the server, the code of the web page based on the information corresponding to the user stored in the database of declarations.

17. The method according to any of claims 12-16, wherein the configurator has a band around it, and/or in an upper, lower and/or side position with respect to the configurator, wherein advertisements are shown.

18. The method according to any of the preceding claims, wherein the repository stores the different sets of instructions also according to certain languages, said method comprising an additional step wherein the server or the electronic device detects the language of the electronic device, and wherein the server or the electronic device when it receives the set of instructions corresponding to the location also does so according to the language detected.

19. The method according to the preceding claim, wherein the repository is a multilingual database associated with the server.

20. The method according to any of the preceding claims, wherein when the information of the user does not satisfy given requirements of the set of instructions corresponding to the location, the server prevents the access of the user to the web page.

21. A system for reproducing a web page and additional information according to the method of claims 1-20, comprising:
- a server configured to store a code of the web page, said code being configured so that when it is executed on a computer, the web page is reproduced, and to transmit the code of the web page after a request to obtain said code by an electronic device;
- a repository configured to store different sets of instructions according to certain locations configured so that when they are executed on a computer they provide additional information and to transmit said sets of instructions to the server or to an electronic device;
- electronic device configured to request and obtain the code of the web page from the server as well as to execute the code of the web page and the set of instructions stored in the repository;
wherein the server and the electronic device are in data communication;
the electronic device is configured to transmit information of a user to the server;
the server and/or electronic device is configured to obtain at least one set of instructions from the repository;
the server and/or the electronic device are configured so that, when the electronic device makes a request to the server for the code of the web page, it detects the location from where the request is made;
such that when the server has detected the location from where the request is made, the server obtains the set of instructions from the repository corresponding to the detected location and transmits the code of the web page and the set of instructions to the electronic device, and/or when the electronic device has detected the location from where the request is made, the electronic device obtains the set of instructions corresponding to the detected location of the repository and the code of the web page from the server.

22. The system according to the preceding claim, wherein the repository is in data communication with the electronic device and/or with the server.

23. The system according any of claims 21-22, wherein the detected location corresponds to a geographical location.

24. The system according to any of claims 21-23, wherein the repository has at least one associated IP address and the server is configured to store it as well as transmit it to the electronic device such that when the electronic device is what detects the location from where the request is made, the electronic device obtains the set of instructions from the repository through the associated IP transmitted by the server.

25. The system according to any of claims 21-24, wherein when the electronic device makes a request to the server to obtain the code of the web page, said request has at least one associated IP address.

26. The system according to the preceding claim, wherein the server or the electronic device are configured to detect the location from where the request is made by means of the location of the IP address associated with the request.

27. The system according to any of claims 21-23, wherein the request to obtain the code of the web page by the electronic device has at least one associated geolocation information.

28. The system according to the preceding claim, wherein the location from where the request is made is detected by means of the location of the geolocation information.

29. The system according to any of claims 21-28, wherein the repository comprises a server connected to a database.

30. The system according to any of claims 21-29 wherein the set of instructions stored in the repository is configured so that when it is executed by a computer it provides additional information about the web page, said additional information comprising the legal terms associated with a service of the server wherein the web page is hosted and the location and age of the user.

31. The system according to the preceding claim, wherein the legal terms refer to the regulations associated with electronic commerce, child and consumer protection and with the treatment of the data compiled by the server from when it receives the request to obtain the code of the web page until the execution of the code of the web page and the set of instructions by the electronic device.

32. The system according to any of claims 21-31, wherein the set of instructions comprises a group of instructions configured so that when they are executed by a computer they provide a configurator to accept, reject, and/or modify the cookies, trackers and/or scripts of the web page.

33. The system according to the preceding claim when it depends on claims 30 or 31, wherein the configurator has an option for reproducing the legal terms associated with a service of the server and with the location to which they belong.

34. The system according to claim 32 or 33, wherein the configurator has a band around it, and/or in an upper, lower and/or side position, wherein advertisements are shown.

35. The system according to any of claims 21 to 34, which further comprises a database of declarations.

36. A computer-implemented method for reproducing a web page and additional information, comprising the steps of the method according to any of claims 1-20.

37. A server comprising means for carrying out the method according to claim 36.

38. A repository configured to store different sets of instructions classified according to certain locations and to be executed with a code of a web page according to the method of any of claims 1-20, said sets of instructions being configured so that when they are executed on a computer they provide additional information, said code of a web page being configured so that when it is executed on a computer a web page is reproduced and said repository being configured to transmit at least one set of instructions to a server or to an electronic device.

39. The repository according to the preceding claim, wherein at least one set of instructions stored in the repository is configured so that when it is executed by a computer, it provides additional information such that said additional information comprises legal terms and terms associated with the location to which they belong.

40. The repository according to any of claims 38-39, wherein the set of instructions comprises a group of instructions configured so that when they are executed by a computer they provide a configurator to accept, reject, and/or modify the cookies, trackers and/or scripts of the web page.

41. The repository according to the preceding claim when it depends on claim 38, wherein the configurator has an option for reproducing the legal terms and/or the access ages associated with the location to which they belong.
